# EUROPÄISCHE PATENTSCHRIFT

(11) **EP 0 726 181 B1**
(45) Veröffentlichungstag und Bekanntmachung des Hinweises auf die Patenterteilung: **10.03.1999**
(21) Anmeldenummer: 95119630.2
(22) Anmeldetag: 13.12.1995
(51) Int. Cl.: B60J 3/02

(54) **Sonnenblende für Fahrzeuge**
Sun visor for vehicles
Pare-soleil pour véhicules

(30) Priorität: 09.02.1995 DE 19504248
(43) Veröffentlichungstag der Anmeldung: 14.08.1996
(73) Patentinhaber: Johnson Controls Interiors GmbH, 42285 Wuppertal (DE)
(72) Erfinder: Gervasoni, Pascal, F-57490 Carling (FR); Sauder, Patrick, F-57730 Folschviller (FR); Lecorvasier, René, F-57470 Hombourg-Haut (FR); Weiss, Didier, F-57880 Guerting (FR)

(56) Entgegenhaltungen:
- DE-U- 9 312 036
- GB-A- 2 272 873
- US-A- 3 371 955

## Beschreibung

Die Erfindung bezieht sich auf eine Sonnenblende für Fahrzeuge mit einem flachen, länglichen, aus einer Nichtgebrauchslage oberhalb einer Fahrzeug-Windschutzscheibe in eine Gebrauchslage vor der Fahrzeug-Windschutzscheibe klappbaren Sonnenblendenkörper, der an einem Endbereich seiner Längserstreckung eine Lasche trägt, die über ein Scharnier mit dem Sonnenblendenkörper verbunden ist, um die Lasche, wenn sich der Sonnenblendenkörper in der Gebrauchslage befindet, aus einer parallel am Sonnenblendenkörper anliegenden Nichtgebrauchslage in eine den erwähnten Endbereich des Sonnenblendenkörpers überragende Lage ausklappbar ist.

Die Sonnenblenden für Fahrzeuge weisen üblicherweise einen Sonnenblendenkörper auf, der so bemessen ist, daß ein in der Regel ausreichender Blendschutz erzielt wird, wenn er sich in der heruntergeklappten Gebrauchslage vor einer Fahrzeug-Windschutzscheibe befindet. Es sind aber auch Sonnenblenden bekannt, an deren Sonnenblendenkörpern Zusatzblendenkörper angeordnet sind, die sich in die Bereiche bewegen lassen, die sich von den eigentlichen Sonnenblendenkörpern nicht abdecken lassen. Mittels Scharnieren oder Gelenken an den Sonnenblendenkörpern angelenkte Zusatzblendenkörper sind ebenfalls zur wirksamen Vergrößerung der Sonnenblendenkörper bekannt, jedoch dienen diese dazu, eine zusätzliche Abdeckung eines Teilbereichs der der Windschutzscheibe benachbarten Seitenscheibe zu erreichen, wenn das Sonnenlicht stark seitlich in ein Fahrzeug einfällt. Insoweit wird auf die GB-A-2 272 873 Bezug genommen, in der eine Sonnenblende für Kraftfahrzeuge gezeigt ist, die eine Normalgröße aufweist und dennoch geeignet ist, einen Fahrer vor frontal und seitlich in das Fahrzeug einfallendem Sonnenlicht zu schützen. Dabei weist diese bekannte Sonnenblende zwei Sonnenblendenkörperteile auf, die über einen gemeinsamen Stützschaft sowie einen zweiten schwenkbaren Schaft an dem Stützschaft oder mit einem dazwischen liegenden Scharnier miteinander verbunden sind. Auf diese Weise kann eines der Sonnenblendenkörperteile, wenn sich die Sonnenblende in der Gebrauchslage vor einer Fahrzeug-Windschutzscheibe befindet, zu einer Seitenscheibe des Fahrzeugs geschwenkt werden, während das andere Sonnenblendenkörperteil vor einer Fahrzeug-Windschutzscheibe verbleibt.

In der Praxis haben sich aber nun Probleme beim Einsatz von Sonnenblenden mit in Normalgröße ausgebildeten Sonnenblendenkörpern ergeben. Diese Probleme treten insbesondere bei Cabrios auf, bei denen in den A-Säulenbereichen Verriegelungselemente zum Schließen oder Lösen des Cabrioletdachs zu bedienen sind. Es hat sich gezeigt, daß hier normal bemessene Sonnenblendenkörper nicht nur störend wirken, sondern ein Betätigen der Verriegelungselemente nicht mehr zulassen. Zur Behebung dieses Problems könnten nun einseitig verkürzte Sonnenblendenkörper zum Einsatz gelangen, womit aber ein neues Problem eines nicht ausreichenden Blendschutzes geschaffen würde.

Der Erfindung liegt die Aufgabe zugrunde, in bezug auf das aufgezeigte Problem Abhilfe zu schaffen.

Die zur Lösung dieser Aufgabe erfindungsgemäß vorgesehene Sonnenblende zeichnet sich dadurch aus, daß die seitliche Länge des Sonnenblendenkörpers kürzer als die bei herkömmlichen Sonnenblenden ist, so daß ein Verriegelungselement oder dgl. am Fahrzeug in der Nähe eines seitlichen Endes des Sonnenblendenkörpers angeordnet sein kann, wenn der Sonnenblendenkörper in einer Nichtgebrauchslage oberhalb der Fahrzeug-Windschutzscheibe ist, und daß die Lasche um 180 Winkelgrade ausklappbar ist und sich nach dem Ausklappen entlang der seitlichen Länge des Sonnenblendenkörpers zu der einer herkömmlichen Sonnenblende erstreckt, wenn der Sonnenblendenkörper in einer Gebrauchslage ist und das Verriegelungselement oder dgl. sich nicht mehr in der Nähe des einen Endes des Sonnenblendenkörpers befindet und daß das Scharnier eine im Sonnenblendenkörper verankerte Scharnierplatte sowie erste Rastelemente an der Scharnierplatte und ein zweites Rastelement an der Lasche umfaßt, die jeweils angeordnet sind, um die Lasche in jeder ihrer eingeklappten und ausgeklappten Lagen durch Ineingriffnahme der jeweiligen Rastelemente an der Lasche und der Scharnierplatte bei jeder dieser Ausrichtungen zu sichern.

Der Sonnenblendenkörper der erfindungsgemäßen Sonnenblende besitzt demnach Normalgröße in seiner Gebrauchslage und eine wesentlich verkürzte Länge in seiner Nichtgebrauchslage. Durch die Normalgröße des Sonnenblendenkörpers wird die Funktionstüchtigkeit der Sonnenblende hinsichtlich eines ausreichenden Blendschutzes gewährleistet, während die gekürzte Länge des Sonnenblendenkörpers einen unbehinderten Zugang zu den Verriegelungselementen oder dgl. ermöglicht.

Zwecks Erhöhung des Bedienungskomforts kann vorgesehen sein, daß im Scharnierbereich der Lasche eine das Ausklappen der Lasche unterstützende Feder angeordnet ist.

Zur einfachen Anordnung der Lasche am Sonnenblendenkörper ist in weiterer Ausgestaltung der Erfindung vorgesehen, daß im Sonnenblendenkörper eine zur Befestigungsanordnung der Scharnierplatte dienende Einlage eingebettet ist.

Ein Ausführungsbeispiel der Erfindung wird nachfolgend anhand der Zeichnungen näher erläutert, und es zeigen:
- Fig. 1: eine Ansicht der erfindungsgemäßen Sonnenblende in der Gebrauchsstellung,
- Fig. 2: eine Ansicht der Sonnenblende nach Fig. 1 in der Nichtgebrauchsstellung und
- Fig. 3: die Anordnung der Lasche am Sonnenblendenkörper in einer Explosivdarstellung.

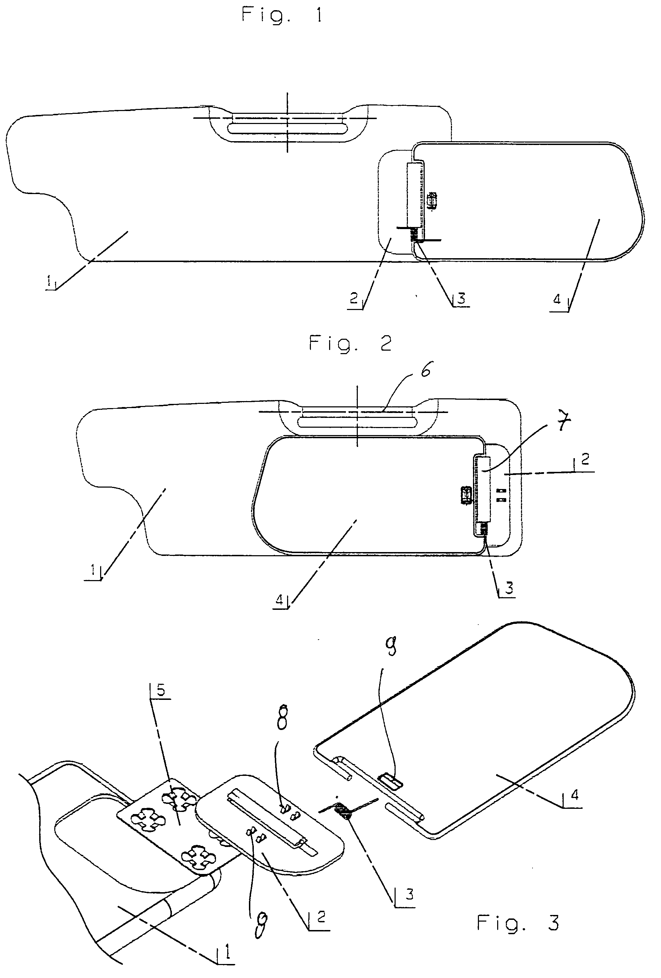

Die Sonnenblende besteht aus einem flachen, länglichen Sonnenblendenkörper 1, der mittels eines den Gelenkzapfen 6 umgreifenden nicht gezeigten Klappscharniers im Bereich der Oberkante einer Windschutzscheibe befestigt ist und sich aus einer Nichtgebrauchslage oberhalb der Windschutzscheibe im Bereich des Dachhimmels in eine Gebrauchslage vor der Windschutzscheibe klappen läßt. Der Sonnenblendenkörper 1 ist im wesentlichen rechteckig gestaltet und weist eine Lasche 4 auf, die mittels eines Scharniers 7 an einem Endbereich seiner Längserstreckung angelenkt ist. Die Lasche 4 ist ebenfalls im wesentlichen rechteckig gestaltet. Die Lasche 4 ist aus einer parallel am Sonnenblendenkörper 1 anliegenden Lage, die gleich der Nichtgebrauchslage des Sonnenblendenkörpers 1 nach Fig. 2 ist, um das zum Klappscharnier des Sonnenblendenkörpers 1 etwa senkrecht ausgerichtete Scharnier 7 um 180 ° ausklappbar. In der ausgeklappten Lage der Lasche 4, die gleich der Gebrauchslage des Sonnenblendenkörpers 1 nach Fig. 1 ist, weist der Sonnenblendenkörper eine Normalgröße bzw. eine normale, sich im praktischen Gebrauch als optimal erwiesene Länge auf.

Zur Befestigung der Lasche 4 ist der Sonnenblendenkörper 1 mit einer darin verankerten Einlage 5 aus Blech oder Kunststoff bestückt. Die Einlage 5 weist Befestigungsöffnungen zum Einrasten von nicht gezeigten Befestigungszapfen auf, die rückseitig an einer Scharnierplatte 2 angeordnet sind. Die Scharnierplatte 2, die aus einem Kunststoff-Spritzgußkörper bestehen kann, weist ein längsgeschlitztes Scharnierauge zum Einklipsen von Scharnierzapfen auf, die sich an der Lasche 4 befinden. Auf dem einen, längeren Scharnierzapfen sitzt eine Torsionsfeder 3, die bestrebt ist, die Lasche 4 aufzuklappen.

Die Lasche 4 kann in der eingeklappten wie auch in der ausgeklappten Lage fixiert werden, und zwar durch Rastelemente 8 an der Scharnierplatte 2, die mit einem Rastelement 9 an der Lasche 4 zusammenwirken.

## Patentansprüche

1. Sonnenblende für Fahrzeuge mit einem flachen, länglichen, aus einer Nichtgebrauchslage oberhalb einer Fahrzeug-Windschutzscheibe in eine Gebrauchslage vor der Fahrzeug-Windschutzscheibe klappbaren Sonnenblendenkörper (1), der an einem Endbereich seiner Längserstreckung eine Lasche (4) trägt, die über ein Scharnier (7) mit dem Sonnenblendenkörper (1) verbunden ist, um die Lasche (4), wenn sich der Sonnenblendenkörper (1) in der Gebrauchslage befindet, aus einer parallel am Sonnenblendenkörper (1) anliegenden Nichtgebrauchslage in eine den erwähnten Endbereich des Sonnenblendenkörpers (1) überragende Lage ausklappbar ist, dadurch gekennzeichnet, daß die seitliche Länge des Sonnenblendenkörpers (1) kürzer als die bei herkömmlichen Sonnenblenden ist, so daß ein Verriegelungselement oder dgl. am Fahrzeug in der Nähe eines seitlichen Endes des Sonnenblendenkörpers (1) angeordnet sein kann, wenn der Sonnenblendenkörper (1) in einer Nichtgebrauchslage oberhalb der Fahrzeug-Windschutzscheibe ist, und daß die Lasche (4) um 180 Winkelgrade ausklappbar ist und sich nach dem Ausklappen entlang der seitlichen Länge des Sonnenblendenkörpers (1) zu der einer herkömmlichen Sonnenblende erstreckt, wenn der Sonnenblendenkörper (1) in einer Gebrauchslage ist und das Verriegelungselement oder dgl. sich nicht mehr in der Nähe des einen Endes des Sonnenblendenkörpers (1) befindet und daß das Scharnier (7) eine im Sonnenblendenkörper (1) verankerte Scharnierplatte (2) sowie erste Rastelemente (8) an der Scharnierplatte (2) und ein zweites Rastelement (9) an der Lasche (4) umfaßt, die jeweils angeordnet sind, um die Lasche (4) in jeder ihrer eingeklappten und ausgeklappten Lagen durch Ineingriffnahme der jeweiligen Rastelemente (8, 9) an der Lasche (4) und der Scharnierplatte (2) bei jeder dieser Ausrichtungen zu sichern.

2. Sonnenblende nach Anspruch 1, dadurch gekennzeichnet, daß im Scharnierbereich der Lasche (4) eine das Ausklappen der Lasche (4) unterstützende Feder (3) angeordnet ist.

3. Sonnenblende nach Anspruch 1 oder 2, dadurch gekennzeichnet, daß im Sonnenblendenkörper (1) eine zur Befestigungsanordnung einer Scharnierplatte (2) dienende Einlage (5) eingebettet ist.

## Claims

1. Sun visor for vehicles, having a flat, elongate sun-visor body (1) which can be swung out of a not-in-use position above a vehicle windscreen into a use position in front of the vehicle windscreen and which bears, at one end region of its longitudinal extent, a flap (4) which is connected to the sun-visor body (1) via a hinge (7), about which, when the sun-visor body (1) is located in the use position, the flap (4) can be swung out of a not-in-use position, in which it rests parallel against the sun-visor body (1), into a position in which it projects beyond the abovementioned end region of the sun-visor body (1), characterized in that the lateral length of the sun-visor body (1) is shorter than that of conventional sun visors, with the result that it is possible to arrange a locking element or the like on the vehicle in the vicinity of a lateral end of the sun-visor body (1) when said sun-visor body (1) is in a not-in-use position above the vehicle windscreen, and in that the flap (4) can be swung out through 180 degrees and, after having been swung out, extends along the lateral length of the sun-visor body (1) to give the length of a conventional sun visor, when the sun-visor body (1) is in a use position and the locking element or the like is no longer located in the vicinity of one end of the sun-visor body (1), and in that the hinge (7) comprises a hinge plate (2), anchored in the sun-visor body (1), and first latching elements (8) on the hinge plate (2) as well as a second latching element (9) on the flap (4), these being arranged in each case in order to secure the flap (4) in each of its swung-in and swung-out positions by virtue of the respective latching elements (8, 9) on the flap (4) and the hinge plate (2) interengaging for each of these orientations.

2. Sun visor according to Claim 1, characterized in that a spring (3) which assists the swinging-out operation of the flap (4) is arranged in the hinge region of the flap (4).

3. Sun visor according to Claim 1 or 2, characterized in that an insert (5) serving for fastening a hinge plate (2) is embedded in the sun-visor body (1).

## Revendications

1. Pare-soleil pour véhicules, comprenant un corps de pare-soleil (1) de forme plate allongée, rabattable depuis une position de non-utilisation au-dessus d'un pare-brise de véhicule dans une position d'utilisation devant le pare-brise du véhicule, lequel corps porte à une zone d'extrémité de son profil allongé un rabat (4), qui est relié au corps de pare-soleil (1) par une charnière (7), de telle sorte que le rabat (4) puisse, lorsque le corps de pare-soleil (1) se trouve dans la position d'utilisation, être rabattu depuis une position de non-utilisation en applique parallèlement contre le corps de pare-soleil (1) dans une position dépassant de ladite zone d'extrémité du corps de pare-soleil (1), caractérisé en ce que la longueur latérale du corps de pare-soleil (1) est plus courte que dans les pare-soleil courants, de sorte qu'un élément de verrouillage ou similaire puisse être disposé sur le véhicule à proximité d'une extrémité latérale du corps de pare-soleil (1), lorsque le corps de pare-soleil (1) est dans une position de non-utilisation au-dessus du pare-brise du véhicule, et en ce que le rabat (4) est rabattable de 180 degrés et s'étend après avoir été ouvert le long de la longueur latérale du corps de pare-soleil (1) jusqu'à une longueur normale de pare-soleil, lorsque le corps de pare-soleil (1) est dans une position d'utilisation et que l'élément de verrouillage ou similaire ne se trouve plus à proximité d'une extrémité du corps de pare-soleil (1), et en ce que la charnière (7) comprend une plaque de charnière (2) ancrée dans le corps de pare-soleil (1) ainsi que des premiers éléments d'encliquetage (8) sur la plaque de charnière (2) et un deuxième élément d'encliquetage (9) sur le rabat (4), lesquels sont disposés chacun de manière à fixer le rabat (4) dans chacune de ses positions rabattue et ouverte par engagement des éléments d'encliquetage respectifs (8, 9) sur le rabat (4) et la plaque de charnière (2) dans chacune de ces orientations.

2. Pare-soleil selon la revendication 1, caractérisé en ce qu'un ressort (3) favorisant l'ouverture du rabat (4) est disposé dans la zone de charnière du rabat (4).

3. Pare-soleil selon la revendication 1 ou 2, caractérisé en ce qu'un insert (5) servant au dispositif de fixation d'une plaque de charnière (2) est encastré dans le corps de pare-soleil (1).
